## Europäisches Patentamt

## European Patent Office

## Office européen des brevets

(19)

(11) Veröffentlichungsnummer: **0 143 156**
**A1**

(12) ## EUROPÄISCHE PATENTANMELDUNG

(21) Anmeldenummer: **84106436.3**

(22) Anmeldetag: **06.06.84**

(51) Int. Cl.⁴: **B 23 K 11/30**

(30) Priorität: **31.10.83 US 547316**

(43) Veröffentlichungstag der Anmeldung: **05.06.85**
**Patentblatt 85/23**

(84) Benannte Vertragsstaaten: **DE FR GB**

(71) Anmelder: **DEERE & COMPANY, 1 John Deere Road,**
**Moline Illinois 61265 (US)**

(72) Erfinder: **Dehn, Dennis Richard, 709 Lynn Street, Horicon**
**Wisconsin 53032 (US)**

(74) Vertreter: **Fricke, Joachim, Dr. et al, Dr. R. Döring, Dr. J.**
**Fricke, Patentanwälte Josephspitalstrasse 7,**
**D-8000 München 2 (DE)**

(54) **Verfahren und Vorrichtung zum Nacharbeiten der Spitzen von sich gegenüberliegenden oberen und unteren Elektroden einer Punkt- schweissmaschine.**

(57) Es sind ein Verfahren und eine Anordnung zur Steuerung des Nachbearbeitungsvorganges der Elektrodenspitzen einer Punktschweißmaschine mit Hilfe einer tragbaren Nachbearbeitungsvorrichtung vorgesehen, welche gewährleisten, daß die Nachbearbeitungsverhältnisse und die Nachbearbeitungsdauer unabhängig vom Geschick und der Aufmerksamkeit der Bedienungsperson so eingesteuert werden, daß eine optimale Lebensdauer der Elektrodenspitzen gewährleistet ist.

EP 0 143 156 A1

<u>Verfahren und Vorrichtung zum Nacharbeiten der
Spitzen von sich gegenüberliegenden oberen und
unteren Elektroden einer Punktschweißmaschine</u>

Die Erfindung betrifft ein Verfahren und eine Vorrichtung zum Nacharbeiten der Spitzen von sich gegenüberliegenden oberen und unteren Elektroden einer
Punktschweißmaschine mit Hilfe einer tragbaren Nachbearbeitungseinrichtung, welche erste Mittel zum
selbsttätigen symmetrischen Ausrichten gegenüber den
Elektrodenspitzen aufweist und die nach Anheben der
oberen, mittels eines Druckmittelzylinders beweglichen Elektrode auf die gestellfeste untere Elektrode
aufgesetzt wird, worauf die obere Elektrode abgesenkt
und die Nachbearbeitungseinrichtung in Betrieb
gesetzt wird.

Derartige transportable, mittels Hand bedienbare Nachbearbeitungseinrichtungen sind z.B. aus den US-PS'n
32 83 662 oder 31 28 672 bekannt. Es ist ferner
bekannt, daß Punktschweißmaschinen einen Druckmittelzylinder, insb. einen Druckluftzylinder aufweisen,
der dazu dient, die obere bewegliche Elektrode gegenüber der unteren gestellfesten Elektrode anzuheben,
und zwar nach einem vorbestimmten Programm, damit die
zu schweißenden Werkstücke in den Schweißspalt geschoben oder in diesem vorgerückt werden können. Der
Druckluftzylinder wird von einem Druckluftspeisekreis
von einer Druckquelle aus gespeist, wobei der Speisekreis in Reihe zwischen der Druckquelle und dem
Druckluftzylinder ein Druckregelventil, ein normalerweise offenes Solenoidventil und eine Betätigungseinrichtung aufweist.

Während des üblichen Schweißprozesses wird ein Werkstück auf die untere stationäre Elektrode aufgelegt.
Danach wird die obere Elektrode abgesenkt, bis sie
das Werkstück berührt, worauf ein ausreichender Strom angelegt wird, um einen Schweißpunkt zwischen den Elektroden zu erzeugen. Die obere Elektrode wird dann pneumatisch durch den Druckluftzylinder angehoben, um das Werkstück zu entfernen oder weiterzubewegen.

Nach wiederholter Verwendung zeigen die Elektrodenspitzen Abnutzungserscheinungen und müssen entweder ersetzt oder an Ort und Stelle nachbearbeitet werden, um die Schweißqualität auf dem gewünschten Maß zu halten. Das an Ort und Stelle Nachbearbeiten der Elektrodenspitze bietet den Vorteil verringerter Stillstandszeiten für die Maschine im Vergleich zu dem Vorgang des Auswechselns der Elektrodenspitzen. Zu den bekannten, mittels Hand transportablen und bedienbaren Nachbearbeitungsvorrichtungen gehört auch eine Vorrichtung, die unter der Bezeichnung "22-Serie, Modell 7165-13" von der Firma "The ARO Corp" in USA hergestellt wird. Bei dieser bekannten Vorrichtung kann die Gefahr bestehen, daß bei nicht genauer Ausrichtung der Vorrichtung gegenüber den Elektrodenspitzen diese so bearbeitet werden, daß die Spitzen nicht mehr gegenüber dem Werkstück in genauer Fluchtung liegen. Dies kann zur Minderung der Schweißqualität führen. Dieses Problem ist in der oben genannten US-PS 31 29 672 angesprochen und gelöst. Dazu ist eine Stützeinrichtung vorgesehen, die an eine tragbare pneumatische Nachbearbeitungseinrichtung angebracht ist, so daß eine relativ gute Nachbearbeitung der Elektrodenspitzen in Folge möglich ist. Die Stützeinrichtung bedarf jedoch erheblichen Platzes, wenn sie an der Nachbearbeitungsvorrichtung angebracht ist, wodurch die Handhabung der Vorrichtung durch die Bedienungsperson erschwert ist, insb. das Einsetzen der Vorrichtung zwischen die Elektroden.

Bei all den bekannten Nachbearbeitungsvorrichtungen besteht ein wesentliches Problem darin, daß wesentliche Einflußgrößen auf die gute Nachbearbeitung der Elektrodenspitzen nicht berücksichtigt sind und auch nicht berücksichtigt werden können. So wird bei den bekannten Vorrichtungen die mögliche Lebensdauer der Elektrodenspitze nur zu einem geringen Teil ausgenutzt. Auch besteht die Gefahr, daß der auch für die Nachbearbeitung verwendete übliche Elektrodendruck, wie er bei der Schweißung herrscht, dazu führt, daß sich die Elektrodenspitze von der Elektrode löst.

Es ist Aufgabe der Erfindung diese Nachteile zu vermeiden und ein Verfahren und eine Anordnung vorzuschlagen, bei der eine genaue und ausgerichtete Nachbearbeitung der Elektrodenspitzen gewährleistet ist und dabei eine optimale Ausnutzung der möglichen Lebensdauer der Elektrodenspitzen erreicht wird, ohne daß die Gefahr besteht, daß die Spitze sich von der Elektrode löst.

Diese Aufgabe wird erfindungsgemäß dadurch gelöst, daß man nach Aufsetzen der Nachbearbeitungseinrichtung auf die untere Elektrode den Speisedruck des Fluids für den Druckmittelzylinder auf einen gegenüber dem normalen Speisedruck erniedrigten Nachbearbeitungsdruck herabsetzt und unter Aufrechterhaltung dieses erniedrigten Druckes die obere Elektrode absenkt, und daß man die Nachbearbeitungsdauer der Elektrodenspitzen durch die Nachbearbeitungseinrichtung auf eine vorbestimmte Zeitspanne selbsttätig begrenzt und die obere Elektrode aus der abgesenkten Stellung mit Ablauf der vorbestimmten Zeitspanne selbsttätig anhebt und den Betrieb der Nachbearbeitungseinrichtung unterbricht.

Zur Ausführung des Vrrfahrens ist eine Anordnung mit den Merkmalen des Oberbegriffs des Anspruchs 2 vorgesehen. Gemäß der Erfindung wird diese Anordnung so weitergebildet, daß von der Verbindungsleitung zwischen dem Druckregelventil und dem Solenoidventil ein Hilfssteuerkreis abzweigt, der unter Umgehung des Solenoidventils und der Betätigungseinrichtung des Hauptkreises mit dem Druckluftzylinder verbunden ist und in Reihe ein zweites Druckregelventil und ein normalerweise geschlossenes Solenoidventil aufweist und von dem hinter dem zweiten Regelventil eine Stichleitung mit einem drittem Regelventil, insb. einem Druckreduzierventil, abzweigt, und daß eine Steuereinrichtung mit Zeitsteuervorrichtung zur Umsteuerung der Solenoidventile aus ihrer normalen Stellung in die andere Stellung für eine vorbestimmte Zeitdauer vorgesehen ist.

Durch das neue Verfahren wird die Möglichkeit geschaffen, eine optimal große Zahl von Nachbearbeitungsvorgängen an der Elektrodenspitze ausführen zu können, bevor diese durch eine neue Spitze ersetzt werden muß. Gleichzeitig gewährleistet das Verfahren, daß der auf die Elektrodenspitze während der Nachbearbeitung wirkende Druck so gering ist, daß ein Lösen der Spitze von der Elektrode nicht zu befürchten ist.

Ein wesentlicher Vorteil der neuen Anordnung besteht darin, daß das übliche pneumatische Betätigungssystem für die Elektroden auch zur Steuerung der Verhältnisse bei der Nachbearbeitung der Elektrodenspitzen ausgenutzt wird, wobei automatisch die normalen Betriebsverhältnisse auf die optimalen Verhältnisse zum Nachbearbeiten der Elektrodenspitzen umgestellt wird.

Durch die Steuerung sowohl des Druckes zwischen den Elektrodenspitzen und der Nachbearbeitungseinrichtung während des Nachbearbeitungsvorganges als auch durch die Steuerung der Nachbearbeitungsdauer optimale und schonende Nachbearbeitungsverhältnisse gewährleistet sind, die eine volle Ausnutzung der Lebensdauer der Elektrodenspitzen ermöglicht.

Das Verfahren und die Anordnung kann bei Nachbearbeitungsvorrichtungen verwendet werden, die nur einen Klingensatz zur Bearbeitung einer Elektrodenspitze oder die zwei Klingensätze zur gleichzeitigen Bearbeitung beider Elektrodenspitzen aufweisen.

Die Erfindung wird nachfolgend anhand schematischer Zeichnungen an einem Ausführungsbeispiel näher erläutert.

Es zeigen:

Figur 1 eine Seitenansicht der neuen Anordnung mit eingesetzter Nachbearbeitungseinrichtung während des Nachbearbeitungsvorganges der Elektrodenspitzen und

Figur 2 schematisch den elektropneumatischen Steuerkreis für die neue Anordung.

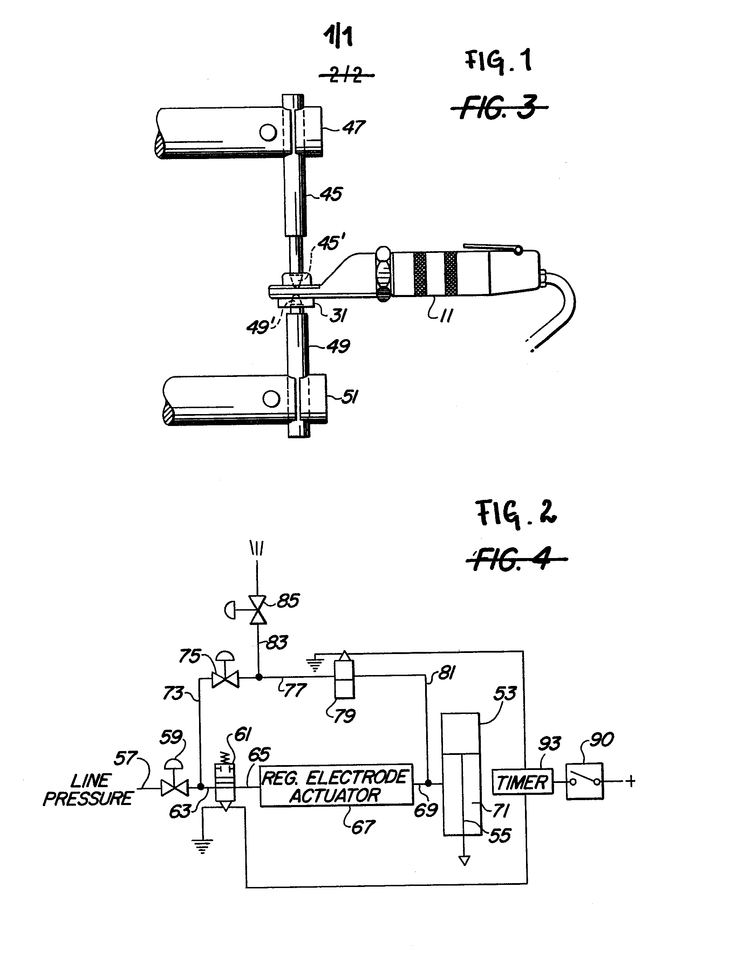

In Figur 1 sind von der Punktschweißmaschine lediglich der obere und der untere Tragarm 47 bzw. 51 für die obere bzw. die untere Elektrode 45 bzw. 49 gezeigt. Jede Elektrode weist eine auswechselbare Elektrodenspitze 45' bzw. 49' auf.

Die tragbare Nachbearbeitungseinrichtung zum Nachbearbeiten der Elektrodenspitzen ist mit 11 bezeichnet. Sie ist in Figur 1 in ihrer Betriebsstellung zwischen den beiden Elektroden gezeigt. Die Nachbearbeitungsvorrichtung weist einen Klingenhalter 31 auf, der entweder so ausgebildet ist, daß er eine Bearbeitung der Elektrodenspitzen nacheinander oder gleichzeitig ermöglicht. Die Nachbearbeitungseinrichtung ist so ausgebildet, daß bei Aufnahme der Elektrodenspitzen diese genau aufeinander ausgerichtet sind.

Es ist angenommen, daß der untere Tragarm 51 gestellfest oder maschinenfest angeordnet ist, während der obere Tragarm 47 mit Hilfe eines in Fig. 1 nicht dargestellten Druckluftzylinders aus der abgesenkten Stellung angehoben werden kann.

In Fig. 2 ist dieser pneumatische Zylinder mit 53 bezeichnet und er weist eine übliche, die Stellbewegung ausführende Kolbenstange 55 auf.

Die Speisung des Druckmittelzylinders erfolgt durch einen Hauptsteuerkreis. Dieser ist über eine Leitung 57 an eine Druckluftquelle angeschlossen. Der Hauptsteuerkreis weist zwischen der Druckluftspeiseleitung 57 und dem Druckluftzylinder 53 in Reihe ein erstes Regelventil 59, ein daran über die Leitung 73 angeschlossenes, normalerweise offenes Solenoidventil 61 und eine daran durch Leitung 65 angeschlossene Betätigungseinrichtung 67 auf, die ausgangsseitig mit der Zuführungsleitung des einseitig beaufschlagbaren pneumatischen Zylinders 53 verbunden ist. Die Zuführungsleitung mündet dabei in die untere Kammer 71 des durch den Kolben in zwei Kammern unterteilten pneumatischen Zylinders.

Bei normalem Betrieb der Punktschweißmaschine wird Druckluft von dem Regelventil 59 über das Solenoid 61 unter Systemdruck der Betätigungseinrichtung 67 zugeführt. Die Betätigungseinrichtung 67 leitet die Druckluft zu der Kammer 71 des pneumatischen Zylinders 53, um über diesen die obere Elektrode 47 anzuheben, so daß ein Werkstück in seine Stellung zwischen den Elektroden 57 und 51 eingebracht werden kann. Durch Abschalten der Betätigungseinrichtung 67 wird die Druckluft aus der Kammer 71 abgelassen, so daß die obere Elektrode 51 aufgrund ihres Eigengewichtes absinkt, um den Punktschweißvorgang in üblicher Weise auszulösen.

Gemäß der Erfindung ist an diesen Hauptsteuerkreis ein Hilfssteuerkreis angeschlossen. Dieser zweigt von der Verbindungsleitung 63 über eine Leitung 73 ab und schließt unter Umgehung des Solenoidventils 61 und der Betätigungseinrichtung 67 über Leitung 81 an die Zuführungsleitung 69 für den pneumatischen Zylinder 53 an.

Der Hilfssteuerkreis weist in Reihe zwischen den Leitungen 73 und 81 ein einstellbares Regelventil 75 auf, das über eine Leitung 77 mit einem normalerweise geschlossenen Solenoidventil 79 verbunden ist, das ausgangsseitig mit der Leitung 81 in Verbindung steht. Zwischen dem Regelventil 75 und dem Solenoidventil 79 zweigt eine Stichleitung 83 von der Leitung 77 ab, die ein einstellbares Regelventil 85 aufweist, über das in einstellbarer Weise der Druck in der Leitung 77 gegenüber dem Druck in den Leitungen 63,73 herabgesetzt werden kann. Ausgangsseitig ist das Regelventil 85 mit der Atmosphäre verbunden.

Um einen Nachbearbeitungszyklus durchführen zu können, stellt die Bedienungsperson die Betätigungseinrichtung 67 in die Betriebsstellung, durch die die obere Elektrode 47 in der angehobenen Stellung gehalten wird. Danach wird die Nachbearbeitungseinrichtung 11 so eingesetzt, daß sie auf der unteren Elektrodespitze 49' aufsitzt und die obere Elektrodenspitze 45' aufnehmen kann. Danach wird der Startschalter 90 betätigt. Dadurch werden die Solenoidventile 61 und 79 umgesteuert, d.h. das Solenoidventil 61 geschlossen und das Solenoidventil 79 geöffnet. Über die Regelventile 75 und 85 wird der Fluiddruck, der der Kammer 71 des pneumatischen Zylinders 53 über die Leitung 81,69 zugeführt wird, wesentlich gegenüber dem durch den Hauptsteuerkreis vorgegebenen normalen Druck herabgesetzt. Dadurch wird erreicht, daß die obere Elektrode in die Nachbearbeitungseinrichtung 11 langsam schwimmend nach unten wandern und in die Nachbearbeitungseinrichtung 11 mit einem vorbestimmten niedrigen Druck eingreifen kann. Die Nachbearbeitungseinrichtung 11 wird kurz vor Eindringen der oberen Elektrodenspitze in die Einrichtung eingeschaltet, um den Nachbearbeitungsvorgang zu ermöglichen.

0143156

In dem elektrischen Steuerkreis für die beiden Solenoide 61 und 79, der den Schalter 90 umfaßt, ist eine Zeitsteuereinrichtung 93 angeordnet. Diese schaltet nach Ablauf einer vorbestimmten Zeit beide Solenoide 61 und 79 wieder in die normalen Stellungen zurück, so daß der pneumatische Zylinder 53 die obere Elektrode automatisch wieder aushebt und nach oben führt und so das Ende des Nachbearbeitungsvorganges bestimmt. Die Anhebung der oberen Elektrode erfolgt automatisch aufgrund der Tatsache, daß vor Beginn der Nachbearbeitungsvorrichtung die Betätigungseinrichtung 67 in die Stellung eingestellt worden ist, durch die der pneumatische Zylinder 53 die obere Elektrode anhebt.

Es wird bemerkt, daß durch den Hilfssteuerkreis und die zusätzlichen Regelventile 75 und 85 eine relativ präzise Steuerung des Druckniveaus in der Zylinderkammer 71 während des Nachbearbeitungsvorganges ermöglicht wird, so daß die Elektrodenspitzen 45' und 49' in der Vorrichtung unter einem optimalen Druck ausgenommen werden. Dadurch wird die Materialabtragsgeschwindigkeit genau gesteuert. Hinzu kommt, daß die Zeitsteuereinrichtung 93 sicherstellt, daß die Elektrodenspitzen nicht übermäßig abgearbeitet werden, so daß man insgesamt eine maximale Lebensdauer der Elektrodenspitzen gewährleisten kann, ohne daß es auf das Geschick oder die Sorgfalt der Bedienungsperson der Nachbearbeitungseinrichtung ankommt

5824a EU
0143156

Patentansprüche

1. Verfahren zum Nacharbeiten der Spitzen von sich gegenüberliegenden oberen und unteren Elektroden einer Punktschweißmaschine mit Hilfe einer tragbaren Nachbearbeitungseinrichtung, welche erste Mittel zum selbsttätigen symmetrischen Ausrichten gegenüber den Elektrodenspitzen aufweist und die nach Anheben der oberen, mittels eines Druckmittelzylinders beweglichen Elektrode auf die gestellfeste untere Elektrode aufgesetzt wird, worauf die obere Elektrode abgesenkt und die Nachbearbeitungseinrichtung in Betrieb gesetzt wird, dadurch g e - k e n n z e i c h n e t , daß man nach Aufsetzen der Nachbearbeitungseinrichtung auf die untere Elektrode den Speisedruck des Fluids für den Druckmittelzylinder auf einen gegenüber dem normalen Speisedruck erniedrigten Nachbearbeitungsdruck herabsetzt und unter Aufrechterhaltung dieses erniedrigten Druckes die obere Elektrode absenkt, und daß man die Nachbearbeitungsdauer der Elektrodenspitzen durch die Nachbearbeitungseinrichtung auf eine vorbestimmte Zeitspanne selbsttätig begrenzt und die obere Elektrode aus der abgesenkten Stellung mit Ablauf der vorbestimmten Zeitspanne selbsttätig anhebt und den Betrieb der Nachbearbeitungseinrichtung unterbricht.

2. Nachbearbeitungsanordnung an Punktschweißmaschinen zum Ausführen des Verfahrens nach Anspruch 1 mit - insb. tragbaren - Einrichtungen (11) zum Nacharbeiten der Spitzen (45',49') der Schweißelektroden (45,49), bei der ein pneumatischer Hauptkreis zum Zuführen von unter Druck stehender Luft zu einem Druckluftzylinder zum Heben und Senken der oberen beweglichen, insb. unter ihrem Eigengewicht absenkbaren Elektrode der Punktschweißmaschine vorgesehen ist, welcher Kreis zwischen einer Druckquelle (57) und dem Druckluftzylinder (53) in Reihe ein Druckregelventil (59),ein normalerweise offenes Solenoidventil (61) und eine Betätigungseinrichtung (67) aufweist, dadurch g e k e n n z e i c h n e t, daß von der Verbindungsleitung (63) zwischen dem Druckregelventil (53) und dem Solenoidventil (61) ein Hilfssteuerkreis abzweigt, der unter Umgehung des Solenoidventils (61) und der Betätigungseinrichtung (67) des Hauptkreises mit dem Druckluftzylinder (53) verbunden ist und in Reihe ein zweites Druckregelventil (75) und ein normalerweise geschlossenes Solenoidventil (79) aufweist, und von dem hinter dem zweiten Regelventil (75) eine Stichleitung (83) mit einem dritten Regelventil, insb. einem Druckreduzierventil (85), abzweigt, und daß eine Steuereinrichtung mit Zeitsteuervorrichtung (93) zur Umsteuerung der Solenoidventile (61, 79) aus ihrer normalen Stellung in die andere Stellung für eine vorbestimmte Zeitdauer vorgesehen ist.

0143156

1/1

~~2/2~~

FIG. 1

~~FIG. 3~~

47

45

45'

31

49'

49

51

11

FIG. 2

~~FIG. 4~~

85

83

75

73

77

81

79

53

59

61

65

57

LINE PRESSURE

63

REG. ELECTRODE ACTUATOR

67

69

71

55

93

TIMER

90

+

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 503 382 (S. FISHER) * Spalte 8, Zeile 4 - Spalte 9, Zeile 60; Figuren * | 1,2 | B 23 K 11/30 |
| | --- | | |
| D,A | US-A-3 128 672 (N.E.O'CONNOR et al.) * Spalte 2, Zeilen 3-25 * | 1,2 | |
| | --- | | |
| D,A | US-A-3 283 662 (W. WEGLIN) * Anspruch 1; Figuren * | 1,2 | |
| | ----- | | |

RECHERCHIERTE SACHGEBIETE (Int. Cl.4)

B 23 K 11/00

Der vorliegende Recherchenbericht wurde für alle Patentansprüche erstellt.

| Recherchenort | Abschlußdatum der Recherche | Prüfer |
|---|---|---|
| BERLIN | 15-02-1985 | WUNDERLICH J E |